**Europäisches Patentamt**

**European Patent Office**

**Office européen des brevets**

(11) Veröffentlichungsnummer: **0 353 326**
**A1**

(12) **EUROPÄISCHE PATENTANMELDUNG**

(21) Anmeldenummer: **88112606.4**

(22) Anmeldetag: **03.08.88**

(51) Int. Cl.⁴: **G01L 5/06**

(43) Veröffentlichungstag der Anmeldung:
**07.02.90 Patentblatt 90/06**

(84) Benannte Vertragsstaaten:
**AT BE CH FR GB IT LI NL SE**

(71) Anmelder: **Dolezych, Udo**
**Im Grund 26**
**D-5804 Herdecke(DE)**

(72) Erfinder: **Graf, Rupprecht, Dipl.-Ing.**
**Rathausstrasse 17c**
**D-5000 Köln 90(DE)**
Erfinder: **Dolezych, Udo**
**Im Grund 26**
**D-5804 Herdecke(DE)**

(54) **Vorrichtung zur Ermittlung einer Zugspannung an Bändern, Gurten und dgl.**

(57) Die Erfindung betrifft eine Vorrichtung zur Ermittlung einer Zugspannung in Bändern, Gurten und dgl. mit zwei über eine Druckfeder nach Maßgabe der Zugspannung abstandsveränderlich gehaltenen Bauteilen, die längsgeführt ineinandergreifend die Druckfeder zwischen sich einschließen. Bei einer solchen Vorrichtung soll eine absolut sichere Funktion die auch in extremen Oberlastungsfällen ohne Bruchrisiko standhält, sichergestellt sein.

Hierzu wird vorgeschlagen, daß der Gehäuseteil (100) an den in Zugrichtung (180) verlaufenden Längsseiten (103, 103b) randlos offen ausgebildet ist, und daß die Zugbügel (104a, 104b) in den Gehäuseteil (100) mit ihren Querstegen (105a, 105b) Rücken an Rücken der ersten Querwand des Gehäuseteils (100) in dieses lose eingelegt und die Meßfederanordnung (119) zwischen den Quersteg (105b) des Zugbügels (104b) und der zweiten Querwand (112) des Gehäuseteils (100) ebenfalls lose eingelegt sind.

FIG.12

Xerox Copy Centre

# Vorrichtung zur Ermittlung einer Zugspannung an Bändern, Gurten und dergleichen.

Die Erfindung betrifft eine Vorrichtung zur Ermittlung einer Zugspannung in Bändern, Gurten und dergleichen mit zwei über eine Druckfeder nach Maßgabe der Zugsprannung abstandsveränderlich gehaltenen Bauteilen, die längsgeführt ineinandergreifend die Druckfeder zwischen sich einschließen.

Gurte, Bänder und dergleichen Zurrmittel werden vielfach zur Ladungssicherung beim Transport verwendet. Um hierbei genügende Sicherheiten gegen ein Verrutschen oder Verschieben der Ladung unter den beim Transport auftretenden Kräften zu vermeiden, müssen nach Maßgabe der Ladungsgewichte und bestimmter physikalischer Werte wie z. B. der Gleit-Reibzahl zwischen Ladefläche und Ladegut errechenbare Spannkräfte oder Sicherungskräfte der Zurrmittel beim Niederzurren, Schrägzurren oder Diagonalzurren eingehalten werden. Entsprechende Rechnungsgrundlagen sind beispielsweise der im Oktober 1986 im Wirtschaftsverlag NW, Verlag für neue Wissenschaft GmbH, 2850 Bremerhaven erschienen Druckschrift "Ladungs-Sicherung leicht gemacht" von H. Dantzer und H. Volkers zu entnehmen. Zur Erfüllung der Forderung der Einhaltung vorgegebener Zugspannungen oder Sicherungskräften an Zurrmitteln wie Bändern und Gurten ist es erforderlich, diesen Mittel zur Erfassung von Zugspannungskräften zuzuordnen. Es sind bereits sogenannte Spannratschen bekannt, mit welchen die erforderlichen Zugspannungen in Größenordnungen von 100 bis zu einigen tausend Kilopond bzw. daN sowohl aufgebracht als auch ermittelt werden können. Um die Belastung bzw. Vorspannung von Zurrmitteln kontrollieren zu können, sind entsprechende Vorrichtungen, sogenannte Spannungsindikatoren, bekannt.

Beispielsweise beschreibt das deutsche Gebrauchsmuster 82 15 729.4 eine Vorrichtung zum Messen und Anzeigen der Zugspannung von Zurrmitteln, insbesondere Zurrgurten und Zurrseilen, mit einem Zylinder und wenigstens einer darin angeordneten Feder. Die bekannte Vorrichtung weist als Federelement eine Tellerfeder oder ein Tellerfederpaket auf, welches sich auf ein mit dem Zylinder fest verbundenes Widerlager abstützt. Dabei ist die Feder von einem aus dem Zylinder herausführenden Stab durchsetzt und von diesem hintergriffen und mit dem Stab ist ein Indikator zur zeige der Zugspannung verbunden.

Nachteilig ist das Tellerfederpaket infolge seiner kurzen Baulänge, hohen Belastung begrenzter Abmessungen so ausgebildet, daß eine Feder mit sehr steilem Federdiagramm und hoher Federkonstante C entsteht. Dadurch ergibt sich ein äußerst kurzer Belastungs-Federweg mit sehr ungenau und/oder schwierig ablesbarer Kotrollanzeige.

Weiterhin stellt der auf Zug belastete, das Federpaket durchsetzende Bolzen ein erhebliches Sicherheitsrisiko dar, weil dieser am Anlenkende des Zurrgurtes einen Gewindeansatz und demzufolge eine durch Kerbwirkung stark geschwächte und somit bruchgefährdete Schwachstelle aufweist, die bei häufig vorkommender Extrembelastung zum Bruch führen muß.

Die bekannte Vorrichtung verstößt somit nachteilig gegen anerkannte Regeln des technischen Handelns, insbesondere bei der der Sicherheit dienenden Vorrichtung.

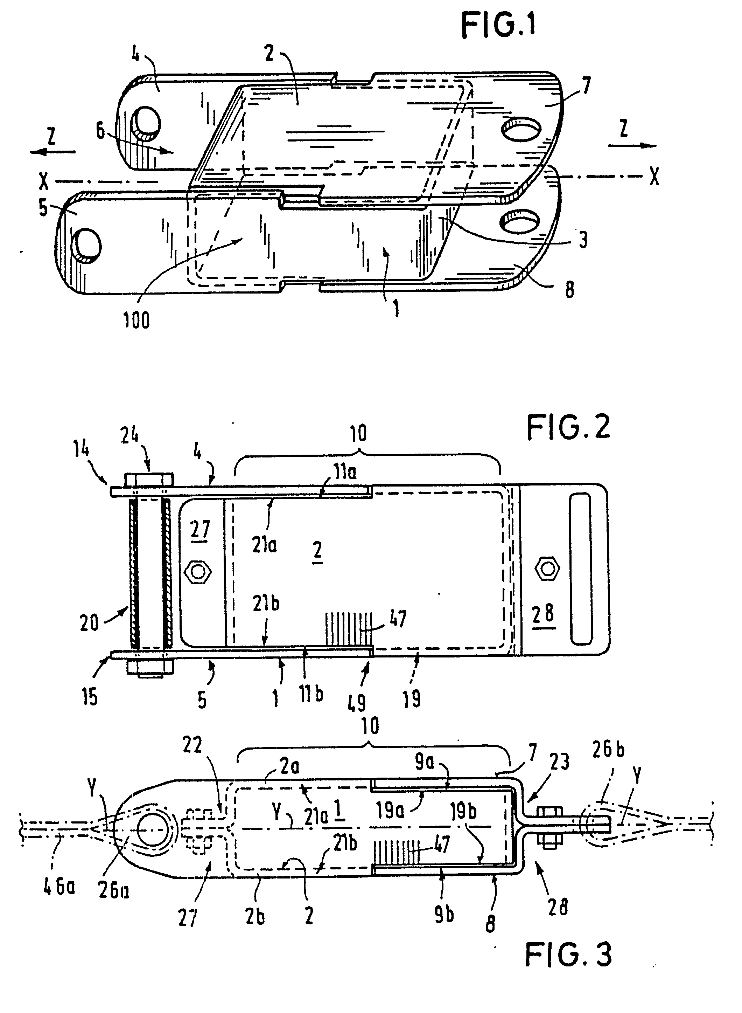

Eine weitere bekannte Vorrichtung mit einer Ratsche zum Spannen von Verzurrmitteln und einer integrierten Vorspannkraftanzeige ist aus der deutschen Offenlegungsschrift 33 46 755 bekannt. Bei dieser ist die Vorspannkraftanzeige gegen Federkraft auf wenigstens einer, vorzugsweise auf zwei Führungen verschiebbar. Entsprechend der dabei getroffenen Ausführung, insbesondere entsprechend den Figuren 2 und 3 wird die Krafteinleitung über ein Einhängeteil 79 eingeleitet und über die Vorspannkraftanzeigevorrichtung 39 auf den Körper 60 der Vorrichtung über die Druckfedern 54 übertragen. Hierbei wirkt auf die Führungen 47, 48 ein Lastmoment, welches sich außerordentlich ungünstig auf das Gleitvermögen der ineinandergreifenden Führungselemente auswirkt und eine hemmende Klemmung erzeugt. Somit wird die Anzeigegenauigkeit in erheblichem Maße nachteilig verändert. Außerdem ist die exponierte Anordnung der Stützfedern der Anzeigevorrichtung in einem nicht geschlossenen Gehäuse sowie die Möglichkeit der Verschmutzung der Gleitführungen ein weiterer Grund zur Störanfälligkeit und somit von erheblichem Nachteil.

Der Erfindung liegt die Aufgabe zugrunde, eine Vorrichtung zur Ermittlung einer Zugspannung an Bändern, Gurten und dergleichen der dem gattungsbildenden Oberbegriff entsprechenden Art gegenüber dem Stand der Technik dahingehend weiterzuentwickeln und zu verbessern, daß die vorgenannten Nachteile vermieden werden.

Dabei betrifft die wichtigste Anforderung eine absolut sichere Funktion, die auch in extremen Uberlastungsfällen ohne Bruchrisiko standhält.

Weiterhin soll die Vorrichtung in Aufbau und Funktion besonders unkompliziert und demzufoge auch preisgünstig herstellbar sein.

Sie soll weiterhin möglichst unempfindlich gegenüber der Einwirkung von Schmutz, Witterungseinflüssen oder anderen äußeren Einwirkungen sein und vorzugsweise einen vergleichsweise längeren Federweg zur Anzeige und damit eine bessere Ablesbarkeit und folglich höhere Genauigkeit bei der Ermittlung einer Zugspannung ergeben.

Weiterhin soll die Führung der ineinandergleitenden Teile so verbessert und beschaffen sein, daß in keinem Falle Lastmomente oder dergleichen Einflüsse die Leichtgängigkeit derselben beeinträchtigen können. Auch soll die Nullpunkt-Feder-Vorspannung mit einfachsten Mitteln justierbar sein.

Die Aufgabe wird bei einer Vorrichtung zur Ermittlung einer Zugspannung an Bändern, Gurten oder dergleichen entsprechend den Merkmalen des Kennzeichnungsteils im Hauptanspruch gelöst.

Weitere vorteilhafte Ausgestaltungen des Erfindungsgegenstandes sind gemäß den Merkmalen der Ansprüche 2 bis 15 vorgesehen.

Mit großem Vorteil ergeben die in einfachster Weise ausgebildeten und lose zusammensteckbaren und dabei justierbaren Funktionsteile der Vorrichtung eine leichtgängige und extrem einfach funktionierende Führung mit hoher Anzeigegenauigkeit. Die gesamte Vorrichtung ist auf wenige Bauteile reduziert und für eine sehr rationelle Herstellung alleine nur durch Stanztechnik geeignet und somit äußerst preisgünstig herstellbar. Weiterhin ist die Vorrichtung unempfindlich gegenüber äußeren Einflüssen, weil die Feder nach außen von Bauteilen schützend umschlossen ist. Die Erfindung wird in rein schematischen Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen

Figur 1 eine perspektivische Darstellung der einfachsten Grundform der Vorrichtung,

Figur 2 die Vorrichtung in Draufsicht,

Figur 3 die Vorrichtung in Seitenansicht,

Figur 4 ein Gehäuseteil in Draufsicht,

Figur 5 das Gehäuseteil in Seitenansicht,

Figur 6 eine Hälfte des Gehäuseteils in Draufsicht 1

Figur 7 das Gehäuseteil in Seitenansicht,

Figur 8 eine Gummidruckfeder in Ansicht von der Breitseite,

Figur 9 die Gummifeder in Ansicht von der Schmalseite,

Figur 10 einen Querschnitt der Feder gem X-X in Fig. 8,

Figur 11 einen anderen Gehäuseteil in perspektivischer Ansicht,

Figur 12 eine Vorrichtung in perspektivischer Ansicht,

Figur 13 die Vorrichtung gem. Fig. 12 in Draufsicht,

Figur 14 die Vorrichtung gem. Fig. 12 in Seitenansicht.

Die Vorrichtung zur Ermittlung einer Zugspannung in Bändern, Gurten und dergleichen mit zwei über eine Druckfeder 28 nach Maßgabe der Zugspannung "Z" abstandsveränderlich gehaltenen Gehäuseteilen, die längsgeführt ineinandergreifend die Druckfeder 29 zwischen sich einschließen, ist rein prinzipiell in vereinfachter Darstellung in der Figur 1 gezeigt, woraus die erfindungsgemäße Zuordnung der Gehäuseteile hervorgeht. Die erfindungsgemäße Vorrichtung weist zwei Gehäuseteile 1 und 2 auf, welche beide U-förmig mit jeweils einem vergleichsweise kurzen Schenkel 3 bzw. 6 und jeweils zwei vergleichsweise langen Schenkeln 4, 5 bzw. 7, 8, ausgebildet und mit um die Gehäuse-Längsachse x-x um 90° gegeneinander verschwenkten Schenkeln 3 bis 8 einander durchgreifend zu einem die Druckfeder 29 umschließenden Gehäuse 100 ausgebildet sind. Diese rein prinzipielle Darstellung der Figur 1 zeigt deutlich den sehr einfachen und dabei äußerst zweckmäßigen Aufbau der Grundelemente der Vorrichtung nach der Erfindung. Hieraus ist ersichtlich, daß sich die Gehäuseteile 1, 2 mit den einander entgegengerichteten langen Schenkelpaaren 4, 5 bzw. 7, 8 im Bereich der Druckfeder 29 abstandsveränderlich überlappend durchdringen.

Wie hierzu weiter insbesondere aus der Zusammenschau der Figuren 2 bis 7 erkennbar, ist jedes Gehäuseteil 1 bzw. 2 im Bereich 10 der das abstandsveränderliche Federgehäuse 100 bildenden Durchdringung bzw. Überlappung des anderen Gehäuseteils 2 bzw. 1 mit jeweils einem Rücksprung 9a, 9b bzw. 11a, 11b seiner einander gegenüberliegenden Querkanten 19a, 19b bzw. 21a, 21b als gegenseitige Gleitführungen für die Gehäuseteile 1 bzw. 2 ausgebildet.

Wie hierzu insbesondere aus den Figuren 2 und 3 der ineinandergreifend dargestellten Gehäuseteile 1, 2 erkennbar wird, übergreifen die ungeschmälerten Endbereiche der langen Schenkel 4, 5 des Gehäuseteils 1 die beiden Rücksprünge 21a, 21b des Gehäuseteils 2. Ebenso übergreifen die langen Schenkel 7 und 8 des Gehäuseteils 2 mit ihren ungeschmälerten Enden die beiden Rücksprünge 19a und 19b des Gehäuseteils 1.

Dadurch ergeben sich, allein nur als Folge der erfindungsgemäß ausgebildeten Formgebung der Gehäuseteile 1 bzw. 2 zwei vergleichsweise lange Gleitführungspaare, welche die Gehäuseteile 1 und 2 leichtgängig und absolut störungsunempfindlich in Längsrichtung gegenseitig führen.

Diese Führungen haben den weiteren Vorteil, daß sie wartungsfrei, unbeeinflußbar von Seitenkräften und somit stets unter allen vorkommenden Betriebsbedingungen sicher funktionieren. Zugleich bilden sie im Zusammenwirken ein allseitig geschlossenes Federgehäuse.

Wie weiter aus der Zusammenschau der Figuren 2 bis 7 erkennbar, sind die als Führungen ausgebildeten und angeordneten Rücksprünge 9a, 9b bzw. 11a, 11b an den Querkanten 19ga,19b bzw. 21a, 21b von etwa der Mitte des Überlappungsbereiches 10 zweier langer Schenkelpaare 4, 5 bzw. 7, 8 ausgehend über den jeweils kurzen Schenkel 3 bzw. 6 eines jeden Gehäuseteils 1 bzw. 2 umlaufend ausgebildet.

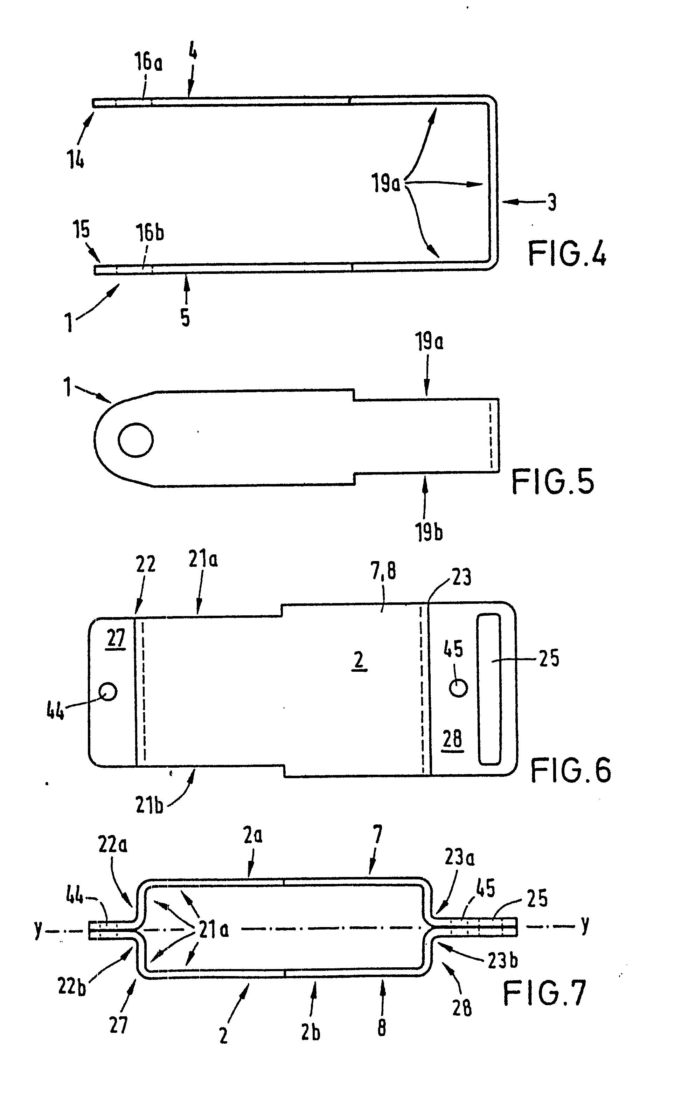

Die Figuren 4 und 5 zeigen, daß das Gehäuseteil 1 als U-förmiges Blechformteil einstückig bzw. einteilig ausgebildet ist. Dabei läßt die Draufsicht in der Figur 4 ebenso wie die Seitenansicht in der Figur 5 erkennen, daß dieses Formteil als Stanzteil aus ca. 3 mm dickem Stahlblech mit einer sehr unkomplizierten, daher äußerst einfachen Raumform ausgebildet ist. Dieses Teil 1 weist einen kurzen Schenkel 3 und zwei vergleichsweise lange Schenkel 4 und 5 auf. Dabei sind die langen Schenkel 4 und 5 geradlinig ausgebildet, und ihre freien Enden 14, 15 sind mit einem Paar einen Anlenkbolzen 24 (Fig. 2) aufnehmenden Bohrungen 16a, 16b versehen.

Der Anlenkbolzen 24 verbindet die freien Enden 14, 15 unter Zwischenlage eines abstandshaltenden Rohrstücks 20 mit einander (Fig. 2).

Dieser Bolzen 24 mit dem Rohrstück 20 werden dann von einer Schlaufe 26a des Spanngurtes 47a umschlungen.

Die Figuren 2 und 3 in Zusammenschau mit den Figuren 6 und 7 zeigen, daß der andere Gehäuseteil 2 aus zweien in der Längs-Mittelebene y-y geteilten Hälften 2a, 2b zusammensetzbar ausgebildet ist. Hierdurch kann die Gummifeder 29 ohne jede Schwierigkeit in das sich im Überlappungsbereich 10 der beiden Gehäuseteile 1 bzw. 2 bildende Federgehäuse problemlos eingebaut werden.

Die das zusammenmontierbare Gehäuseteil 2 bildenden Hälften 2a, 2b weisen jeweils an beiden Enden 27, 28 gegen die gemeinsame Teilungsebene bzw. Längs-Mittelebene y-y zu vorstehende und mit Montagebohrungen 44, 45 versehene Abkröpfungen 22a, 22b bzw. 23a, 23b auf.

Die dem Anlenkbolzen 24 gegenüberliegende Abkröpfung 23 ist nach außen verlängert und mit einem Schlitz 25 zur Aufnahme einer Gurtschlaufe 26b des Spanngurtes 46b ausgebildet. Weiterhin ist im Bereich ,der Abkröpfung des Teils 1 an dessen Schmalseite eine Anzeigeskala 47 vorgesehen, welche im Zusammenwirken mit der vom Rücksprung 19 gebildeten Kante 49 den Spannungszustand ablesbar macht.

Selbstverständlich kann anstelle der Anzeigekante auch ein anderes Anzeigemittel wie eine Kerbe oder ein Zeiger in entsprechendem Zusammenwirken mit einer gegenüberliegenden Skala 47 an einem der langen Schenkel 4, 5 oder auch 7, 8 angeordnet sein.

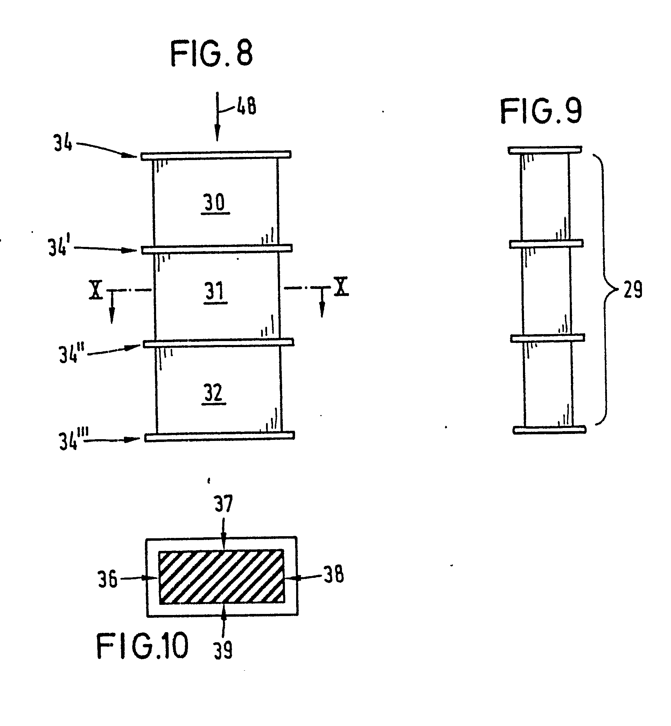

Die erfindungswesentliche Ausgestaltung der Gummidruckfeder 29 ist in den Figuren 8 bis 10 dargestellt.

Die Feder 29 ist in der Belastungsrichtung 48 aus wenigstens zwei Federelementen 30, 31, 32 zusammengesetzt, die zwischen mit diesen verbundenen Führungsplatten 34, 34′ 34″ 34‴ angeordnet sind.

Die Zahl der in Reihe angeordneten Federelemente hängt von der Raumgestaltung und Belastung der einzelnen Elemente und von der Gesamtlänge der fertigen Gummidruckfeder 29 ab.

Es können demnach auch zwei oder wesentlich mehr als drei Federelemente zu einer Gummidruckfeder kombiniert sein. Auf diese Weise kann die Federcharakteristik bzw. die sogenannte Federkonstante bzw. Federkennlinie entsprechend dem praktischen Anwendungsfall in weiten Grenzen vorgegeben werden.

Ersichtlich erfordert eine Gummidruckfeder 29 für ihre störungsfrei-ordnungsgemäße Funktion eine Raumgestalt mit abgestimmtem Verhältnis von Länge zu Querschnittsform. Eine zu lange Druckfeder würde unter Lasteinwirkung zur Seite ausknicken und sich in regelloser Weise verformen und dabei zu Fehlanzeigen führen.

In der erfindungsgemäßen Weise unterteilt und mit Führungsplatten geführt, kann die Gesamt-Gummifeder 29, wie in den Figuren 8 und 9 gezeigt, ein sehr viel günstigeres Längen/ Querschnittsverhältnis von beispielsweise 2 : 1 oder 3 : 1 aufweisen, ohne daß die Gefahr einer Ausknickung gegeben ist.

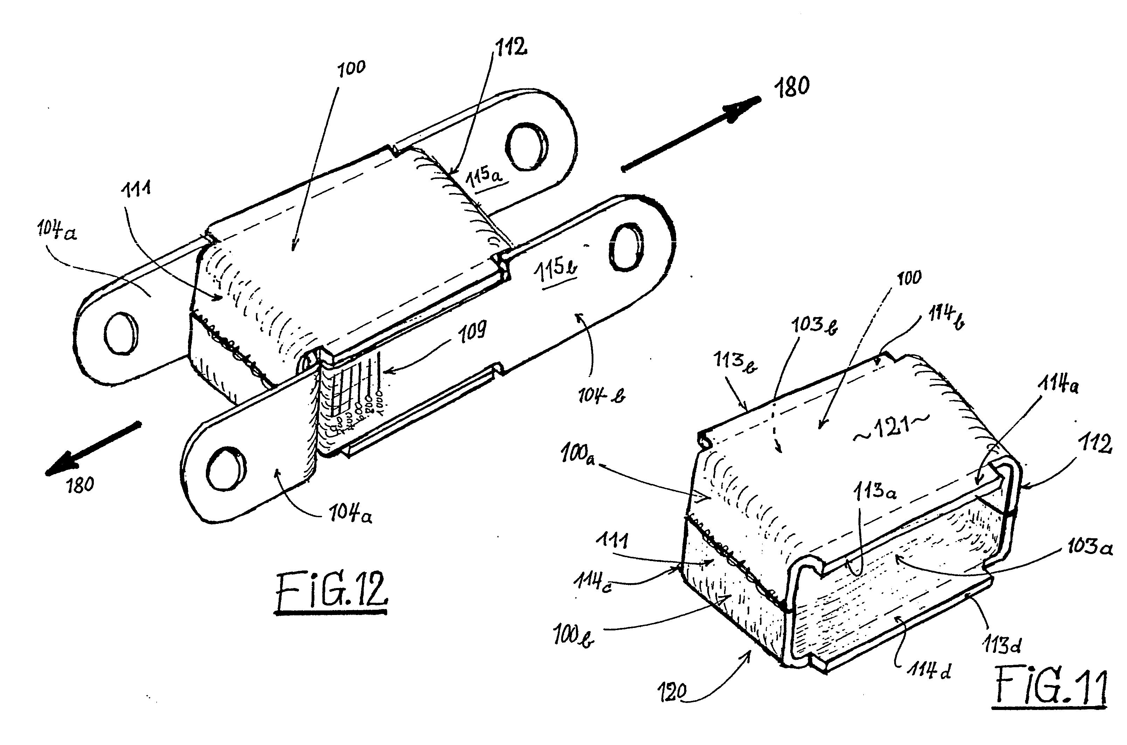

Hierfür ist es erforderlich, daß gemäß erfindungsgemäßer Ausgestaltung die Seitenflächen 36 bis 39 (Fig. 10) gegenüber den Rändern 40 bis 43 der Führungsplatten 34 mit umlaufenden Seitenabständen zurückspringend ausgebildet sind.

Weil die Vorrichtung nach der Erfindung ein Höchstmaß an funktioneller Qualität mit einfachem und kompaktem Aufbau, preisgünstiger Herstellbarkeit und absolut sicherer Funktion verbindet, kann mithin von einer idealen Lösung der eingangs gestellten Aufgabe gesprochen werden.

In den Figuren 11 bis 13 ist eine weiter verbesserte Ausführung der Vorrichtung gezeigt, die im folgenden näher erläutert werden wird.

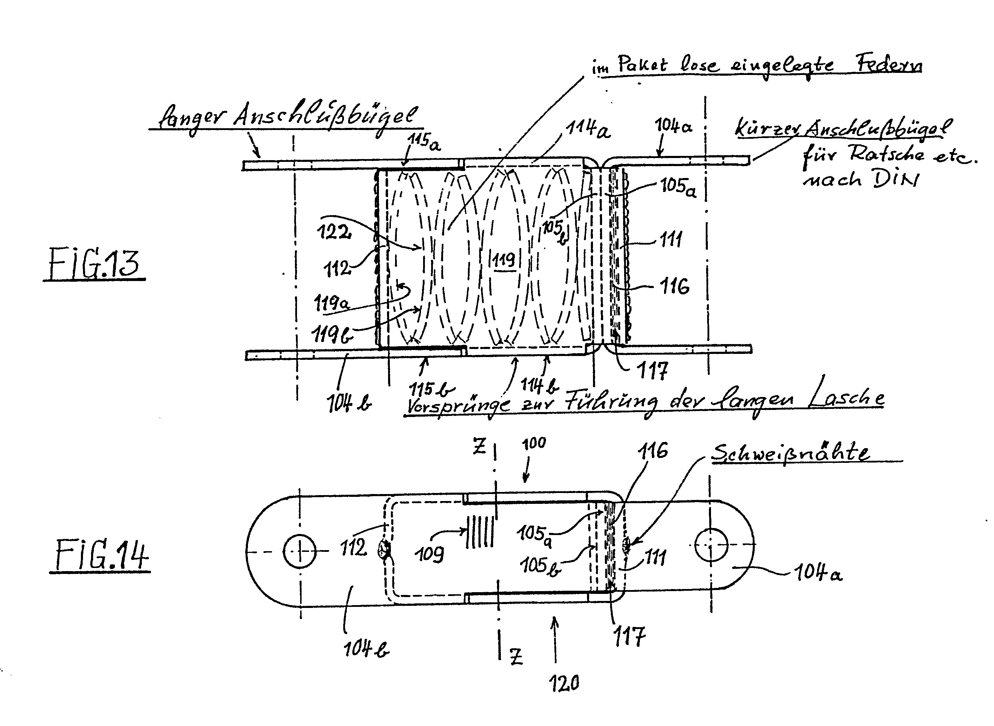

Hierbei ist ein Gehäuseteil 100 an den in Zugrichtung 180 verlaufenden Längsseiten 103a, 103b wandlos offen ausgebildet. Dabei sind die Zugbügel gemäß Zusammenschau der Figuren 11 bis 14 in den Gehäuseteil 100 mit ihren Querstegen 105a, 105b Rücken an Rücken an der ersten Querwand 111 des Gehäuseteils 100 in dieses lose eingelegt. Die Meßfederanordnung 119 ist zwischen dem Quersteg 105b des Zugbügels 104b und der zweiten Querwand 112 des Gehäuseteils 100 ebenfalls lose eingelegt.

Hiermit wird eine hoch-effiziente, einfache und mit äußerst unkomplizierten Maschinen und Mitteln herzustellende und vorzugsweise einfach zu montierende Vorrichtung geschaffen, die gegenüber dem Stand der Technik einen signifikanten Vorteil ergibt.

Erfindungswesentlich ergibt die Konstruktion nach der Erfindung auch die Möglichkeit einer einfachen Justierung des Feder-Anzeigeweges dadurch, daß nach einem weiteren Vorschlag die zueinander im parallelen Abstand angeordneten Längskanten 113a, 113b der beiden offenen längsseiten 103a, 103b des Gehäuseteils 100 mit vorspringenden Führungsstegen 114a, 114b, 114c, 114d für die dazwischen gleitbar geführten Längsstege 115a, 115b des Zugbügels 104b ausge bildet sind, wobei zwischen der ersten Querwand 111 des Gehäuseteils 100 und dem Quersteg 105a des Zugbügels 104a ein Justierscheiben bzw. Justierplättchen 116 aufnehmender Justierzwischenraum 117 zur Einstellung einer definierten Feder-Nullweg-Vorspannung vorgesehen ist.

Der Gehäuseteil ist in einer quer zur Zugrichtung 118 aufgespannten Ebene Z-Z mit einem rechteckigen Querschnitt ausgebildet.

Dies ergibt eine sehr robust-kompakte Bauweise bei einfacher Fertigungsvoraussetzung.

Weiterhin ist das Gehäuseteil 100 mit je einer rechteckigen Grundfläche 120 sowie Deckfläche 121 ausgebildet und an den beiden seitlichen Längsseiten 103a, 103b offen.

Hierbei ist mit sehr großem Vorteil für Herstellung sowie Montage und Justierbarkeit in erfindungswesentlicher Weise der Gehäuseteil 100 aus zwei identisch gleichen Halbschalen 100a, 100b aufgebaut, welche erst nach Einlegen der Bauteile 104a, 104b, 119 zusammengesetzt werden und dann durch Flansche mittels Schrauben oder ohne Flansche mittels Schweißnähten verbunden werden.

Ein weitere Vereinfachung und Verbesserung gegenüber dem Stand der Technik wird dadurch erreicht, daß nach einem Vorschlag zur Ausgestaltung der Vorrichtung die Meßfederanordnung aus einem Paket 119 einzelner lose aneinander geschichteter Federblätter 119a, 119b, 119c usw. besteht.

Weil diese Federblätter 119a usw. mit keinem Bauteil der Vorrichtung eine feste Verbindung aufweisen, kann auch, wie vorgängig dargelegt, durch Hinterfütterung des Pakets 119 mit den Justierplättchen 116 eine unkomplizierte Nullpunkts-Justierung erfolgen, die zur Erleichterung der Montage und zum Zusammenbau erhebliche Vorteile bringt und somit einerseits die Qualität der Vorrichtung steigert und die Herstellungskosten senkt.

Dabei können die Federblätter 119a usw. aus flachem Federstahlband hergestellt und in Form einer gestreckten Brücke 122 geschwungen oder gekantet ausgebildet sein. Diese sind dann jeweils gengleich, das heißt, einmal Rücken an Rücken oder mit den Vorderseiten gegeneinander lose geschichtet, wie die beispielsweise in der Figur 13 gezeigt ist.

Weiterhin ist vorgesehen ,daß die zwischen den Führungsstegen 114 unter Lastangriff relativ zu diesen lastpropotional verschiebbar geführten Längsstege 115a, 115b des Zugbügels 104b an ihren Außenflächen 110a, 110b jeweils eine mit Strichen und/oder Ziffern versehene Anzeigeskala 109 zur Indikation der angreifenden Zugkräfte 118 aufweisen, die relativ zu einer feststehenden Markierung 108 bzw. Marke an den Führungsstegen 114a, 114b usw. ablesbar sind.

## Ansprüche

1. Vorrichtung zur Ermittlung der Zugspannung in Bändern, Gurten und dergleichen, deren Bauteile über eine Meßfederanordnung nach Maßgabe einer angreifenden Last lastproportional-abstandsveränderliche Relativbewegungen ausführen, mit einem Gehäuseteil und je einem Paar nach beiden Seiten in Zugrichtung von diesem abstehenden, jeweils mit zwei parallelen Längsstegen und einem diese verbindenden Quersteg ausgebildeten Zugbügeln, welche an ihren freien Enden in gegenüberliegend fluchtenden Bohrungen Anschlußbolzen zum Ankoppeln von Zurrmitteln aufweisen, **dadurch gekennzeichnet,** daß der Gehäuseteil (100) an den in Zugrichtung (180) verlaufenden Längsseiten (103a, 103b) wandlos offen ausgebildet ist, und daß die Zugbügel (104a, 104b) in den Gehäuseteil (100) mit ihren Querstegen (l05a, 105b) Rücken an Rücken an der ersten Querwand (111) des Gehäuseteils (100) in dieses lose eingelegt und die Meßfederanordnung (119) zwischen dem Quersteg (105b) des Zugbügels (104b) und der zweiten Querwand (112) des Gehäuseteils (100) ebenfalls lose eingelegt sind (Figuren 11 bis 14).

2. Vorrichtung nach Anspruch 1, dadurch gekennzeichnet, daß zwischen der ersten Querwand (111) des Gehäuseteils (100) und dem Quersteg (105a) des Zugbügels (104a) ein Justierscheiben bzw. Justierplättchen (116) aufnehmender Justierzwischenraum (117) zur Einstellung einer definierten Feder-Nullweg-Vorspannung vorgesehen ist.

3. Vorrichtung nach Anspruch 1, dadurch gekennzeichnet, daß die zueinander im parallelen Abstand angeordneten Längskanten (113a, 113b) der beiden offenen Längsseiten (103a, 103b) des Gehäuseteils (100) mit vorspringenden Führungsstegen (114a, 114b, 114c, 114d) für die dazwischen gleitbar geführten, parallelen Längsstege (115a, 115b) des Zugbügels (104b) ausgebildet sind.

4. Vorrichtung nach einem der Ansprüche 1 bis 3, dadurch gekennzeichnet, daß der Gehäuseteil (100) in einer quer zur Zugrichtung aufgespannten Ebene (Z-Z) mit einem rechteckigen Querschnitt ausgebildet ist.

5. Vorrichtung nach einem der Ansprüche 1 bis 4, dadurch gekennzeichnet, daß der Gehäuseteil (100) mit je einer rechteckigen Grundfläche (120) und Deckfläche (121) aus gebildet und an den beiden seitlichen Längsseiten (103a, 103b) offen ist.

6. Vorrichtung nach einem der Ansprüche 1 bis 5, dadurch gekennzeichnet, daß der Gehäuseteil (100) aus zwei identisch gleichen Halbschalen (100a, 100b) besteht, welche erst nach Einlegen der Bauteile (104a, 104b, 119) zusammensetzbar sind und durch Flansche verschraubbar oder mittels Schweißnähten (126a, 126b) verschweißbar verbunden sind.

7. Vorrichtung nach einem der Ansprüche 1 bis 6, dadurch gekennzeichnet, daß die Meßfederanordnung (119) aus einem Paket lose aneinandergeschichteter einzelner Federblätter (119a, 119b, 119c usw.) besteht.

8. Vorrichtung nach einem der Ansprüche 1 bis 7, dadurch gekennzeichnet, daß die Federblätter (119a usw.) aus flachem Federstahlband hergestellt und in Form einer gestreckten Brücke (122) geschwungen oder gekantet ausgebildet sind.

9. Vorrichtung nach einem der Ansprüche 1 bis 8, dadurch gekennzeichnet, daß die Federblätter (119ga, usw.) jeweils gegengleich, das heißt entweder Rücken an Rücken oder mit den Vorderseiten gegeneinander lose geschichtet sind.

10. Vorrichtung nach einem der Ansprüche 1 bis 9, dadurch gekennzeichnet, daß die zwischen den Führungsstegen (114) unter Lastangriff relativ zu diesen lastproportional verschiebbar geführten Längsstege (115a, 115b) des Zugbügels (104b) an ihren Außenflächen (110a, 110b) jeweils eine mit Strichen und/oder Ziffern versehene Anzeigeskala (109) zur Indikation der angreifenden Zugkräfte aufweisen, die relativ zu einer feststehenden Markierung (108) bzw. Marke an den Führungsstegen (114a bis 114d) ablesbar sind.

11. Vorrichtung nach einem der Ansprüche 1 bis 10, dadurch gekennzeichnet, daß diese Zugbügel mit U-förmigen Längs(4, 5 bzw. 7, 8) und Querschenkeln (3, 6) aufweist und diese mit um die Längsachse (x-x) um 90° gegeneinander verschwenkten Schenkeln (3 bis 8) einander durchgreifend und die Meßfederanordnung (29) umschließend angeordnet sind (Figur 1).

12. Vorrichtung nach einem der Ansprüche 1 bis 11, dadurch gekennzeichnet, daß die Zugbügel (1, 2) im Bereich ihrer Überlappung (10) mit jeweils einem Rücksprung (9a, 9b bzw. 11a, 11b) der einander gegenüberliegenden Querkanten (19a, 19b bzw. 21a, 21b) als gegenseitige Gleitführungen ausgebildet sind.

13. Vorrichtung nach einem der Ansprüche 11 oder 12, dadurch gekennzeichnet, daß die Führungs-Rücksprünge (9 bzw. 11) an den Querkanten (19a, 19b bzw. 21a, 21b) von etwa Mitte Überlappungsbereich (10) ausgehend über die kurzen Schenkel (3, 6) der Zugbügel (1, 2) umlaufend ausgebildet sind.

14. Vorrichtung nach einem der Ansprüche 11 bis 13, dadurch gekennzeichnet, daß einen Gehäuseteil bildende Formteile (2a, 2b) jeweils an beiden Enden (27, 28) gegen die gemeinsame Teilungsebene (y-y) vorstehende und mit Bohrungen (44, 45) versehene Abkröpfungen (22, 23) aufweisen, wobei die einem Anlenkbolzen (24) gegenüberliegende Abkröpfung (23) nach außen mit einem Flansch verlängert und mit einem Schlitz (25) zur Aufnahme einer Gurtschlaufe (26) ausgebildet ist.

15. Vorrichtung nach einem der Ansprüche 11 bis 14, dadurch gekennzeichnet, daß die Meßfederanordnung (29) als Gummifeder ausgebildet und aus wenigstens zwei Federelementen (30, 31 usw.) zusammengesetzt ist, die durch Führungsplatten (34) verbunden sind.

**FIG.1**

**FIG.2**

**FIG.3**

FIG.4

FIG.5

FIG.6

FIG.7

FIG.8

FIG.9

48

34

30

34'

X ---- 31 ---- X

34"

32

34'''

29

37

36 ///////// 38

FIG.10   39

FIG.11

FIG.12

FIG.13

im Paket lose eingelegte Federn
langer Anschlußbügel
kürzer Anschlußbügel
für Ratsche etc.
nach DIN
115a
114a
104a
122
112
119a
119b
119
105a
105b
111
116
104b
115b
114b
117
Vorsprünge zur Führung der langen Lasche

FIG.14

Z
100
116
Schweißnähte
112
109
105a
105b
111
117
104b
Z
120
104a

EP 0 353 326 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 248 789 (RUD-KETTENFABRIK RIEGER & DIETZ GmbH) * Seite 7, Zeilen 11-36; Seite 8, Zeilen 1-23; Figuren 1-3 * --- | 1,7,10-12,14 | G 01 L 5/06 |
| A | GB-A-2 093 198 (FRANCIS & LEWIS LTD) * Seite 1, Zeilen 102-129; Seite 2, Zeilen 1-25; Figuren 1,2 * ----- | 1,11,15 | |
| | | | **RECHERCHIERTE SACHGEBIETE (Int. Cl.4)** |
| | | | G 01 L |

Der vorliegende Recherchenbericht wurde für alle Patentansprüche erstellt

| Recherchenort | Abschlußdatum der Recherche | Prüfer |
|---|---|---|
| DEN HAAG | 28-03-1989 | ZAFIROPOULOS N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)